# EUROPEAN PATENT SPECIFICATION

(11) **EP 4 023 598 B1**
(45) Date of publication and mention of the grant of the patent: **22.11.2023**
(21) Application number: 19943759.1
(22) Date of filing: 26.08.2019
(51) Int. Cl.: C01B 32/174, B82B 3/00, B82B 1/00, C08K 3/013, C08K 3/04, B82Y 30/00, H01B 1/18, C08J 5/00, C08K 5/103, C08L 23/04, H01B 1/24

(54) **CHLORINE-MODIFIED CARBON MATERIAL**
CHLORMODIFIZIERTES KOHLENSTOFFMATERIAL
MATÉRIAU À BASE DE CARBONE MODIFIÉ PAR DU CHLORE

(43) Date of publication of application: 06.07.2022
(73) Proprietor: MCD Technologies S.a.r.l, 3364 Leudelange (LU)
(72) Inventor: PREDTECHENSKIY, Mikhail Rudolfovich, g. Novosibirsk, 630008 (RU); BOBRENOK, Oleg Filippovich, Novosibirsk, 630090 (RU); KHASIN, Aleksandr Aleksandrovich, Moscow, 115035 (RU); ALEKSEEV, Artem Vladimirovich, Novosibirsk, 630024 (RU)
(74) Representative: Hoffmann Eitle
(86) International application number: PCT/RU2019/000594
(87) International publication number: WO 2021/040554

(56) References cited:
- EP-B1- 1 623 437
- RU-C2- 2 668 037
- RU-C2- 2 717 516
- DUESBERG GEORG S. ET AL: "Hydrothermal functionalisation of single-walled carbon nanotubes", SYNTHETIC METALS, vol. 142, no. 1-3, 1 April 2004 (2004-04-01), pages 263-266, XP055796457, CH ISSN: 0379-6779, DOI: 10.1016/j.synthmet.2003.09.009
- BARTHOS R ET AL: "Functionalization of single-walled carbon nanotubes by using alkyl-halides", CARBON, ELSEVIER OXFORD, GB, vol. 43, no. 2, 1 January 2005 (2005-01-01), pages 321-325, XP004744705, ISSN: 0008-6223, DOI: 10.1016/J.CARBON.2004.09.018
- DUESBERG GEORG S. et al.: "Hydrothermal functionalisation of single-walled carbon nano tubes", Synthetic Metals, vol. 142, no. 1-3, 13 April 2004 (2004-04-13), pages 263-266, XP055796457,
- BARTHOS R. et al.: "Functionalization of single-walled carbon nanotubes by using alkyl-halides", Carbon, vol. 43, no. 2, 2005, pages 321-325, XP004744705, DOI: 10.1016/j.carbon. 2004.09.01 8

## Description

### Field of the Invention

The invention is related to carbon materials, in particular to carbon materials with chlorine-modified surface, and to technologies to produce thereof.

In another aspect, the invention is related to conductive polymer composite materials produced by introducing single walled carbon nanotubes therein, and to technologies to produce thereof.

### Prior Art

Modification of carbon materials leads to the changes in their properties that are advantageous for a broad range of applications. It is well known that carbon materials having a chlorinated surface have an improved stability towards oxidation, including in wet environments. Modification with chlorine can increase acidity of the surface of carbon materials both due to the effect that chlorine has on oxygen-containing moieties present on the surface of carbon materials [M.J.B. Evans, E. Halliop, S. Liang, J.A.F. MacDonalod, The Effect of Chlorination on Properties of Activated Carbon // Carbon, 36(11) 1998, pp. 1677-1682; G.S. Duesberg, R. Graupner, P. Downes, A. Minett, L. Ley, S. Roth, N. Nicoloso, Hydrothermal functionalisation of single-walled carbon nanotubes // Synth. Met., 142 (1-3) 2004; Patent Document EP1623437B1], and due to the changes in the electron density of the rings of the carbon material itself [A.F. Perez-Cadenas, F.J. Maldonado-Hodar, C. Moreno-Castilla, On the Nature of Surface Acid Sites of Chlorinated Activated Carbons // Carbon 41(3) 2003, pp. 473-478].

Chlorine modification of the surface of single walled carbon nanotubes results in the changes in the population of the valence band of semiconductive single walled carbon nanotubes and their increased conductivity. Chlorine-modified carbon materials can be used as a starting material to produce other functionalized materials via nucleophilic exchange reactions.

Research and patent literature describes various methods for modification of the surface of carbon materials with chlorine. One of efficient methods to chlorinate carbon materials is treating the material with gaseous C1₂ at elevated temperatures, i.e. 165°C or higher [M.J.B. Evans, E. Halliop, S. Liang, J.A.F. MacDonald, The Effect of Chlorination on Properties of Activated Carbon // Carbon, 36(11) 1998, pp. 1677-1682]. The literature describes chlorine chemisorption by amorphous carbon from phosphorus pentachloride, PCl₅ [M.R.Lockett, L.M. Smith, Attached Molecules to Chlorinated and Brominated Amorphous Carbon Substrates via Grignard Reactions // Langmuir, 2009, 25(6), pp. 3340-3343]. Methods of chlorination of multiwalled carbon nanotubes by treating them with iodine trichloride [V.K. Abdelkader, M. Domingo-Garcia, M.D. Guitierrez-Valero, R. Lopez-Garzon, M. Melguizo, C. Garcia-Gallarin, F.J. Lopez-Garzon, M. J. Perez-Mendoza, Sidewalled Chlorination of Carbon Nanotubes by Iodine Trichloride. J. Phys.Chem. C. 118 (2014) 2641-2649], thionyl chloride, and some other highly reactive chlorides have also been described. An obvious drawback of all these methods is high reactivity, and therefore, high toxicity of the used reagents.

An alternative approach is to combine a chemical interaction with activation by physical techniques. Thus, up to 2.5 at.% of chlorine could be introduced into the material comprising mostly single walled carbon nanotubes by their electrochemical functionalization in the solutions of K chloride and hydrochloric acid at applied potential above the oxidation potential of chloride anion [P.M. Rafailov, C. Thomsen, M. Monev, U. Dettlaff-Weglikowska, S. Roth, Electrochemical Functionalization of SWNT Bundles in Acid and Salt Media as Observed by Raman and X-Ray Photoelectron Spectroscopy. // Phys. Stat. Solidi B 2008, 245, 1967-1970.].

Multiwalled carbon nanotubes could be successfully modified with chlorine upon their milling in the atmosphere of chlorine gas [Z. Kónya, I. Vesselenyi, K. Niesz, A. Kukovecz, A. Demortier, A. Fonseca, J. Delhalle, Z. Mekhalif, J. B.Nagy, A.A. Koós, Z. Osváth, A. Kocsonya, L.P. Biró, I. Kiricsi, Large scale production of short functionalized carbon nanotubes // Chemical Physics Letters, Vol. 360, Iss. 5-6 (2002) 429-435].

A substantial amount of chlorine (up to 6.7 at.%) could be introduced into the material comprising single walled carbon nanotubes by milling them in a ball mill in the presence of alkyl chlorides [R. Barthos, D. Mehn, A. Demortier, M. Pierard, Y. Moriaux, G. Demortier, A. Fonseca, J.B. Nagy, Functionalization of single-walled carbon nanotubes by using alkyl-halides // Carbon 43 (2005) 321-325].

However, such methods significantly alter the structure of the carbon material: the length of multiwalled carbon nanotubes is many times reduced (the tubes are broken); the cited references report that in the course of electrochemical functionalization of single walled carbon nanotubes, the ratio of intensities of Raman bands corresponding to G and D modes is reduced to 1.5; and that, after milling the single walled carbon nanotubes in a ball mill in the presence of tetrachloroethylene "aggregates with loose structure become dominant", i.e. the structure of the single walled carbon nanotubes is destroyed. When the structure of the initial carbon material, e.g. single walled carbon nanotubes, is valuable and must be preserved, such techniques cannot be applied.

Another known method of producing a carbon material comprising single walled carbon nanotubes and modified with chlorine, as well as material produced by the method, are described in paper [George S. Duesberg et al, Hydrothermal functionalization of single-walled carbon nanotubes, Synthetic Metals, 2004, V.142, pp. 263-266]. In the described method, single walled carbon nanotubes are placed into an autoclave together with 5 M aqueous solution of hydrochloric acid and heated to 250 or 500°C for 114 or 24 hours, respectively. Such hydrothermal treatment produces material that is chlorine-modified single walled carbon nanotubes, with chlorine content being about 0.4 at.%. A drawback of the method described in the paper is treatment with HCl vapors at rather high temperatures and pressures requiring special autoclaves resistant to HCl under such conditions, as well as low process throughput, rendering any industrial application of the described method inefficient.

Invention [L. Stobiinski, O. Michalski, P. Tomasik, A. Borodzinski, P. Kedzierzawski. Sposob otrzymywania chlorowanych nanorurek weglowych. PL Patent 222515 B1, 31-08-2016, IPC:B82B3/00, C01B31/00] is the closest to the invention, and it discloses a method of producing chlorinated carbon nanotubes via chemical reaction of gaseous chlorine with carboxylated nanotubes. The chemical interaction of gaseous chlorine with carboxyl moieties on the surface of carbon nanotubes is activated thermally by heating the reactor volume up to 150-350°C using convective heat transfer, or up to 100 to 200°C using UV radiation or pulse MW radiation. Unreacted absorbed molecular chlorine is removed by eluting with organic solvent (methanol was used in the examples), and the product is dried in a desiccator with phosphorus pentoxide. This way, up to 1.12 wt.% (0.316 mmol/g) chlorine can be introduced. A drawback of the described method is that carbon nanotubes must be treated with highly toxic chlorine gas at elevated temperature, as well as subsequently washed with a highly toxic solvent, methanol.

Regarding conductive composite materials produced by introducing single walled carbon nanotubes, note that conductivity of the carbon material is important for the application of the carbon material as an additive.

The most efficient nanoadditive to produce conductive composite materials is single walled carbon nanotubes. Modification of single walled carbon nanotubes with chlorine to form ... C-Cl, ... C-O-Cl sites on their surfaces increases conductivity of single walled carbon nanotubes, in particular of those where chirality provides a semiconductive electronic structure. As a result of doping the electronic structure, the conductivity of chlorine-modified semiconductive nanotubes is increased manifold. Since the fraction of semiconductive single walled carbon nanotubes is 2/3 of the total amount of single walled carbon nanotubes under the conditions of equally probable implementation of different chiralities, modification with chlorine can result in up to 3-fold increase in the concentration of conductive nanotubes. In the area of high concentrations of additives (nanotubes), such an increase in the concentration of the conductive additive according to the known Kirkpatrick percolation law can result in up to 9-fold increase in the conductivity of the composite. On the other hand, in the range of low concentrations, near the percolation threshold, modification of single walled carbon nanotubes with chlorine can lead to an increase by several orders of magnitude in the conductivity of the composite material produced using such single walled carbon nanotubes.

A method is known to prepare conductive composite polymer materials with carbon nanotubes [J.C. Grunlan, V.R. Cross, K.A. Smith. Conductive carbon nanotube-polymer composite. EP Patent 1623437 B1, 24-04-2003, IPC:H01B1/24, C08K7/24, C08K3/04], wherein it is suggested to introduce carbon nanotubes, preferably single walled carbon nanotubes, into the polymer composite material in the amount of not more than 1% by mixing a suspension of the polymer material and a suspension of single walled carbon nanotubes, followed by solvent removal. Thus, the obtained composite materials possess conductivity, with the concentration of single walled carbon nanotubes above the percolation threshold, which was 0.04 wt.% for one of the examples described in this patent. A drawback of this method is that only 1/3 of single walled carbon nanotubes have metallic conductivity, while their chirality defines their semiconductive properties for 2/3 of single walled carbon nanotubes. Therefore, only one third of single walled carbon nanotubes in the material form a conductive percolation network.

### Disclosure of the Invention

The proposed invention solves the problem of producing a chlorine-modified carbon material comprising single walled carbon nanotubes without treating the carbon nanotubes with highly toxic chlorine gas at elevated temperature, as well as subsequent washing with a highly toxic solvent, methanol.

The invention also solves the problem of producing a composite conductive material comprising single walled carbon nanotubes, most of them participating in a percolation network.

The problem is solved by providing a method of producing a chlorine-modified carbon material comprising single walled carbon nanotubes using iron (III) chloride, FeCl₃, as a source of chlorine. To this end, the carbon material comprising single walled carbon nanotubes is reacted with an iron chloride solution having a concentration of 0.1 M or higher, the wet carbon material is separated from the iron chloride solution, and the wet material is thermally treated at a temperature above 80°C, simultaneously evaporating the solution and drying the carbon material to the desired moisture content, e.g. to 3%.

As used herein, the term "carbon material" refers to a material comprising phases or nanoparticles of known allotropes of elementary carbon, including graphite-like carbon, multiwalled carbon nanotubes, few walled carbon nanotubes, single walled carbon nanotubes, fullerenes, graphene, amorphous carbon, nanodiamonds, etc. The carbon material may further comprise other chemical elements, both as part of carbon phases and particles and as part of separate phases, e.g. metals, metal oxides, metal carbides, etc. The presence of such impurities in the carbon material may exceed 50 wt.%, but the material is still referred to as "carbon material" in case the carbon phases or particles determine substantial functional properties of the material. In case of adsorbents, it is specific surface area of the material; in case of fillers for composite materials, it is their morphology, length to diameter ratio for fibers or nanotubes, as well as electrical conductivity of the material.

As used herein, the term "single walled carbon nanotube" refers to the objects mostly comprising carbon atoms ordered into a cylindrically folded graphene layer. A single walled carbon nanotube may comprise heteroatoms, such as oxygen, nitrogen, and others; the content of heteroatoms can be determined according to the method and conditions of producing the carbon material, or conditions of its subsequent treatment, and it may reach up to 10 wt.%. Single walled carbon nanotubes may also be modified with chlorine. The content of single walled carbon nanotubes in the material can be determined using high-resolution electron microscopy techniques or spectral techniques, i.e. NIR-Vis absorption spectroscopy (0.2-2.5 eV) and Raman spectroscopy, as described in paper [M.E. Itkis, D.E. Perea, R. Jung, S. Niyogi, R.C. Haddon, Comparison of Analytical Techniques for Purity Evaluation of Single-Walled Carbon Nanotubes, J. Am. Chem. Soc. 2005, Vol. 127, pp. 3439-3448]. These techniques can also be used to estimate the concentration of single walled carbon nanotubes in the material. As an indicator of the fraction provided by single walled carbon nanotubes in the carbon material, the ratio of integral intensities of G line and D line in the Raman spectrum can be used.

Reaction of the carbon material comprising single walled carbon nanotubes with the iron chloride solution may be provided by arranging a flow of the iron chloride solution through an immobilized bed of the carbon material, by suspending the carbon material in the iron chloride solution, or by another known method. To ensure the contact of the carbon material surface with the iron chloride solution, vacuum impregnation may be used. The carbon material may be separated from the iron chloride solution by filtration, decanting, centrifuging, or by other known methods. The moisture content of the carbon material after separation of the iron chloride solution depends on the morphology and porosity of the material. In case of fibrous material morphology, such as single walled carbon nanotubes, the moisture content may reach up to 90%. However, preferably the moisture content does not exceed 86%.

During the thermal treatment of the carbon material and the iron chloride solution, evaporation of the solution, its concentration, and the processes of hydrolysis of iron chloride and cations in the solution with the release of hydrogen chloride take place.

FeCl₃ + 2 H₂O → FeOOH + 3H⁺ + 3Cl⁻

This process is a set of processes involving (FeCl₃)_{aq}, FeCl₂⁺, FeCl²⁺, Fe³⁺, Fe(OH)²⁺, Fe(OH)₂⁺, as well as FeCl₄ and other ions, with their concentration in the solution being determined by thermodynamic equilibrium and depending on the solution temperature, concentration, and stoichiometry. Complex ions comprising Fe³⁺ cation are capable of serving as oxidizing and chlorinating agents with iron reduction to Fe²⁺. The active chlorine-containing particles react with defects of basal layer of graphite and graphite-like phases or graphene layers and moieties on the surface of the carbon material to form ... -C-Cl, ... CO-Cl sites, etc. Some processes may be described with the reaction equations provided below for FeCl₃ aqua complex for illustration only:

FeCl₃ + >C=C< + H⁺**→** FeCl₂ + >CH-CCl<

FeCl₃ + >C=O + H⁺ → FeCl₂ + >CCl-OH

etc.

Processes within porous structure and cage effect under the conditions of pronounced diffusion control of the reaction ensure an efficient reaction of the active chlorine-containing particles with the carbon material surface. The choice of solution concentration and conditions of thermal treatment provide an opportunity to control the degree of the material chlorination.

The set of processes of hydrolysis of iron chloride and reduction of Fe³⁺ during chlorination of the carbon material results not only in chlorination of the material, but also in formation of solid phases of hydroxides or oxides of Fe³⁺ and Fe²⁺ in the carbon material pores in the amounts comparable to the amount of chlorine added.

For a large number of applications of carbon materials, including application of the material as an adsorbent, as additives in composite materials, e.g. to impart electrical conductivity, introduction of relatively small amounts of iron oxide simultaneously with its chlorination has no effect on the properties of the carbon material or the composite material obtained while using the material.

The problem is also solved by providing a method of producing a chlorine-modified carbon material comprising single walled carbon nanotubes using, as an initial material, the carbon material (I) comprising single walled carbon nanotubes, which contains 0.5 to 50 wt.% impurities of iron oxide. In this case, the iron chloride solution used to modify the carbon material with chlorine is prepared by reacting the impurities of iron oxide or oxyhydroxide contained in the carbon material (I) with a hydrochloric acid solution with a concentration of at least 0.1 M. An advantage of this method is that no additional iron impurities are introduced into the material during its modification with chlorine. Furthermore, the total iron content can decrease due to the removal of some iron at the step of separating the carbon material from the solution before the thermal treatment of the wet material. To accelerate the process of preparation of the iron chloride solution, the temperature of the solution is preferably maintained at not lower than 40°C.

The present invention also provides a method of producing a chlorine-modified carbon material comprising single walled carbon nanotubes using, as the initial material, the carbon material (II) comprising single walled carbon nanotubes, which contains 0.3 to 40 wt.% of nanosized impurities of iron carbide and metallic iron. In this case, the carbon material (II) comprising nanosized impurities of iron carbide and metallic iron is first annealed in the gas flow comprising molecular oxygen and water vapor at a temperature of not lower than 350°C to produce a sufficient amount of iron oxide, and then the iron chloride solution used to modify the carbon material with chlorine is prepared by reacting iron oxide formed upon annealing with a hydrochloric acid solution with a concentration of 0.1 M or higher. In this embodiment of the method, no additional iron impurities are introduced into the carbon material during its modification with chlorine.

The presence, in the carbon material, of a substantial amount of nanosized iron carbide or metallic iron used to prepare the iron chloride solution acting as a chlorinating agent may be a result of the history of the carbon material and the method used to produce it. In particular, the carbon material (II) comprising nanoparticles of iron carbide and metallic iron may be prepared using the method of chemical vapor deposition from a hydrocarbon or a mixture of hydrocarbons with the use of nanoparticles of an iron-containing catalyst.

An advantage of the invention is the preservation of the structure and morphology of single walled carbon nanotubes in the carbon material, as the provided method does not include steps with a harsh energetic or mechanical impact on the carbon material. As illustrated by the examples provided below, the present invention provides a method that only slightly reduces the ratio of integral intensities of the G mode and D mode, with this ratio in the chlorine-modified material possibly exceeding 60 and even 100.

One of the embodiments of method of producing a chlorine-modified carbon material comprising single walled carbon nanotubes comprises reacting it with an iron chloride solution having a concentration of at least 0.1 M, separating the wet carbon material from the iron chloride solution and reacting this material with a hydrogen peroxide solution, reseparating the wet carbon material from the solution, and then thermally treating at a temperature of at least 80°C, with simultaneously evaporating the solution and drying the carbon material to the desired moisture content, e.g. 3%. Presence of both iron chloride and hydrogen peroxide in the solution results in the activation of hydrogen peroxide by iron chloride to form oxygen-containing active sites on the carbon material surface. Thermal treatment of the material treated in this way with the iron chloride and hydrogen peroxide solution at a temperature of at least 80°C produces a carbon material with a high degree of surface modification with chlorine.

Another embodiment of producing a chlorine-modified carbon material comprising single walled carbon nanotubes by its reaction with an iron chloride solution having a concentration of at least 0.1 M, separation from the iron chloride solution, further comprises the step of washing the carbon material with water to optimize the concentration of the solution before the step of thermal treatment, and to reduce the amount of iron in the modified material if high iron content in the material is undesirable. To this end, before the step of thermal treatment, the carbon material is washed with water, and a wet carbon material with a moisture content of not more than 90% is separated from the solution one more time.

The chlorine-modified carbon material comprising single walled carbon nanotubes produced as described may comprise at least 90 wt.% carbon and at least 3 wt.% of chlorine. As illustrated by the examples provided below, when certain conditions are met, the chlorine-modified carbon material may comprise at least 97 wt.% carbon and at least 0.1 wt.% of chlorine. Single walled carbon nanotubes are not formed during the proposed method of modifying the material, but single walled carbon nanotubes present in the initial carbon material are preserved in the modified material. The ratio of integral intensities of the G mode and D mode in the Raman spectrum for light wavelength 532 nm for the chlorine-modified carbon material is at least 2. In one embodiment of the present invention, the chlorine-modified carbon material comprises mostly single walled carbon nanotubes. As illustrated by the examples provided below, the ratio of integral intensities of the G mode and D mode in the Raman spectrum for light wavelength 532 nm for the chlorine-modified carbon material may exceed 100, with carbon content in the material being at least 90%.

The preservation of the structure of single walled carbon nanotubes is an important advantage of the proposed method of modifying the carbon material with chlorine compared to other methods involving a combination of chemical interaction with physical activation and resulting in a destruction of the structure of single walled carbon nanotubes. Modification with chlorine and simultaneous preservation of the structure of single walled carbon nanotubes provides an increased electrical conductivity of single walled carbon nanotubes. Therefore, the chlorine-modified carbon material comprising single walled carbon nanotubes can be efficiently used as an additive to produce composite polymer materials having electrical conductivity.

The problem is also solved by providing a method of producing a composite conductive polymer material, which includes the step of introducing single walled carbon nanotubes modified with chlorine according to the method described above. The composite material produced by this method acquires the ability to conduct electric current with volume resistivity not more than 10⁷ Ohm·cm. An advantage of the proposed method compared to the known ones, e.g. [EP Patent 1623437, IPC H01B1/24, C08K7/24, C08K3/04, date of priority March 24, 2003], is a lower electric percolation threshold and lower resistivity at the same concentration of the carbon additive introduced into the composite material. The use of the carbon material comprising single walled carbon nanotubes and modified with chlorine according to the method of the present invention results in reduced resistivity or reduced content of the carbon additive in the material compared to the known methods of preparing conductive polymer composites using multiwalled or single walled carbon nanotubes. As illustrated by the examples provided below, introduction of as small as 0.03 wt.% of chlorine-modified single walled carbon nanotubes into UV-curable polymer composite materials based on polyacrylates allows producing a polymer composite material with volume resistivity 3.2 Ohm·m, which is 7.5 times lower than for the introduction of the same amount of single walled carbon nanotubes without their modification with chlorine. As illustrated by other examples provided below, introduction of chlorine-modified single walled carbon nanotubes provides conductive polymer composite materials based on thermoplastics, thermosetting materials, elastomers. The achieved electrical conductivity parameters are higher, and the volume resistivity is lower than when using single walled carbon nanotubes not modified with chlorine to prepare composite materials with the same concentration and using similar conditions for the preparation of the composite material.

Chlorine-modified single walled carbon nanotubes can be introduced into the polymer material or into the melt of the polymer material by one of the known methods using three-roll mills, kneaders, extruders at elevated temperatures, or other methods. Chlorine-modified single walled carbon nanotubes can be introduced into the monomer or prepolymer before the reaction of polymerization or polycondensation that will result in producing the composite polymer material. The introduction of chlorine-modified single walled carbon nanotubes can be performed from a concentrate comprising at least 0.4% of chlorine-modified single walled carbon nanotubes dispersed in a matrix of a compound that is soluble in the polymer.

The present invention also provides a composite polymer material into which the carbon material comprising single walled carbon nanotubes is introduced and which is modified with chlorine according to the method described above. Such composite polymer material has lower resistivity than composite materials of the same composition, but prepared using carbon materials not modified with chlorine.

### Brief Description of Drawings

Fig. 1 shows the energy dispersive spectroscopy spectrum of the initial carbon material II described in Example 3.
Fig. 2 shows the energy dispersive spectroscopy spectrum of the modified carbon material described in Example 3.
Fig. 3 shows a TEM image of a sample of the produced material described in Example 3 comprising mostly single walled carbon nanotubes.
Fig. 4 shows the energy dispersive spectroscopy spectrum of the initial carbon material described in Example 5.
Fig. 5 shows the energy dispersive spectroscopy spectrum of the modified carbon material described in Example 5.
Fig. 6 shows a TEM image of a sample of produced material described in Example 5 comprising mostly single walled carbon nanotubes.
Fig. 7 shows the energy dispersive spectroscopy spectrum of the modified carbon material described in Example 6.

### Best Embodiment of the Invention

The provided invention is illustrated by the following examples.

### Example 1 (Comparative)

The modified carbon material is produced using the carbon material comprising a mixture of multiwall, few wall, and single walled carbon nanotubes, graphite-like carbon, and amorphous carbon, as well as impurities of metallic cobalt and oxides of cobalt and magnesium. The likely source of impurities is the catalyst used to produce the carbon material. The carbon material has a specific surface area of 126 m²/g, according to the results of elemental analysis by energy dispersive spectroscopy, the content of cobalt in the carbon material is 0.7 wt.%., magnesium 0.3 wt.%, oxygen 1.6 wt.%, ash content is 1.5 wt.% Chlorine in the initial carbon material is absent or is present in an amount below the detection threshold of the analysis (0.05 wt.%). According to Raman spectroscopy results for light wavelength 532 nm, the ratio of integral intensities of the G mode and D mode for the initial carbon material is 3.8. 10 g of carbon material is suspended in 1 dm³ of FeCl₃ solution with a concentration of 100 g/l (0.5 M), followed by filtering the suspension to separate 19.1 g of wet carbon material from the solution. The moisture content of the material is 48 wt.%. The wet carbon material is placed into a drying oven and subjected to thermal treatment at a temperature of 80°C for 24 hrs. The moisture content of the material after thermal treatment is 1.3 wt.%. According to the results of elemental analysis by energy dispersive spectroscopy, the produced material comprises 93.25 wt.% carbon; 1.8 wt.% oxygen; 0.8 wt.% cobalt; 0.25 wt.% magnesium; 1.5 wt.% iron; and 2.4 wt.% of chlorine. According to Raman spectroscopy results for light wavelength 532 nm, the ratio of integral intensities of the G mode and D mode for the chlorine-modified carbon material is 3.6.

### Example 2. (Comparative)

The modified carbon material is prepared similarly to Example 1, but before the thermal treatment step, the wet carbon material is suspended in 300 ml water, stirred, and filtered again to separate 18.8 g of wet carbon material with a moisture content of 46.8% from the solution. The wet carbon material is placed into a drying oven and subjected to thermal treatment at a temperature of 80°C for 24 hrs. The moisture content of the material after thermal treatment is 1.2 wt.%. According to the results of elemental analysis by energy dispersive spectroscopy, the produced material comprises 97.16 wt.% carbon; 1.7 wt.% oxygen; 0.6 wt.% cobalt; 0.25 wt.% magnesium; 0.2 wt.% iron; and 0.9 wt.% of chlorine. According to Raman spectroscopy results for light wavelength 532 nm, the ratio of integral intensities of the G mode and D mode for the chlorine-modified carbon material is 3.7.

### Example 3.

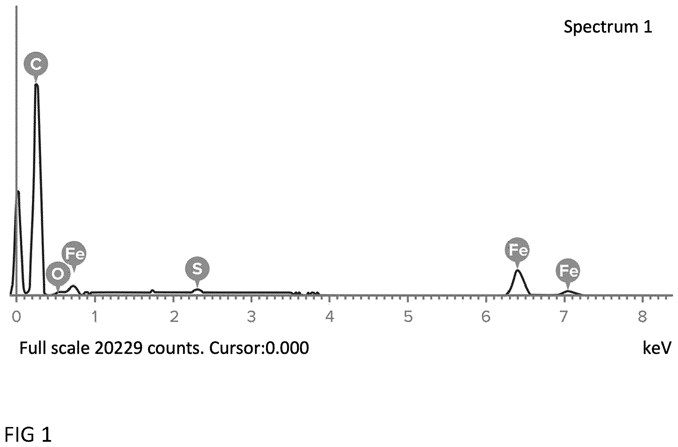

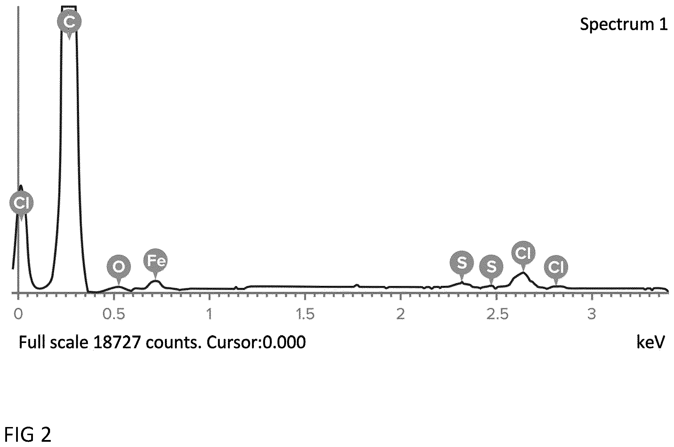

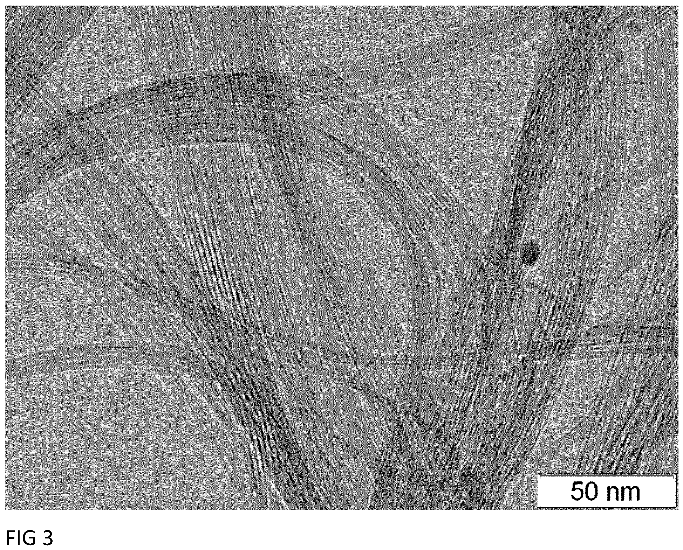

The modified carbon material is produced using the carbon material (II) comprising mostly single walled carbon nanotubes (the ratio of integral intensities of the G mode and D mode in the Raman spectrum for light wavelength 532 nm is 125), as well as impurities of metallic iron or iron and sulfur carbide. The likely source of impurities is the catalyst used to produce the carbon material. The carbon material (II) has a specific surface area of 540 m²/g, according to the results of elemental analysis by energy dispersive spectroscopy, the content of carbon in the carbon material (II) is 84.2 wt.%, oxygen 2.3 wt.%., sulfur 0.34 wt.%, iron 13.2 wt.%. Chlorine in the initial carbon material (II) is absent or is present in an amount below the detection threshold of the analysis (0.05 wt.%), the spectrum of the carbon material (II) is shown in Fig. 1. 1 kg of this material is subjected to oxidation in a flow of wet air with a partial pressure of water vapors at 430°C for 4 hours to produce 930 g of carbon material (I) comprising an impurity of iron oxides. 930 g of the produced material (I) is contacted with 30 L of 3.5% (1 M) hydrochloric acid to produce a suspension of the carbon material comprising mostly single walled carbon nanotubes in the iron chloride solution. Then, 5.8 kg of wet carbon material with a moisture content of 86 wt.% is separated from the iron chloride solution by filtration. The wet carbon material is placed into a vacuum drying oven with stirring and subjected to thermal treatment under 200 mbar vacuum and oven walled temperature 130°C for 24 hrs. The moisture content of the material after thermal treatment is 2 wt.%. According to the results of elemental analysis by energy dispersive spectroscopy, the produced material comprises 88.88 wt.% carbon; 3.1 wt.% oxygen; 0.26 wt.% sulfur; 6.5 wt.% iron; and 1.0 wt.% of chlorine. The spectrum of the modified carbon material is shown in Fig. 2. According to the TEM data shown in Fig. 3, the sample still contains mostly single walled carbon nanotubes. According to Raman spectroscopy results for light wavelength 532 nm, the ratio of integral intensities of the G mode and D mode is 114.

### Example 4.

The modified carbon material was produced similarly to Example 3, but after using filtration to separate 5.8 kg of wet carbon material with a moisture content of 86 wt.% from the iron chloride solution, this wet carbon material was reacted with the hydrogen peroxide solution with a concentration of 30 wt.%, and the wet carbon material with a moisture content of less than 84 wt.% was separated from the solution again, it was placed into a drying oven and subjected to thermal treatment at a temperature of 130°C for 24 hrs. The moisture content of the material after thermal treatment was 2.3 wt.%. According to the results of elemental analysis by energy dispersive spectroscopy, the produced material comprises 86.4 wt.% carbon; 3.4 wt.% oxygen; 0.2 wt.% sulfur; 4.5 wt.% iron; and 5.5 wt.% of chlorine. According to the TEM data, the sample still contains mostly single walled carbon nanotubes. According to Raman spectroscopy results for light wavelength 532 nm, the ratio of integral intensities of the G mode and D mode is 108.

### Example 5.

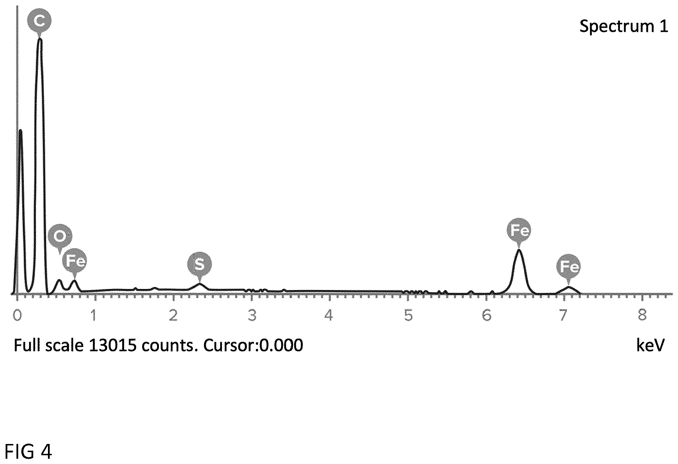

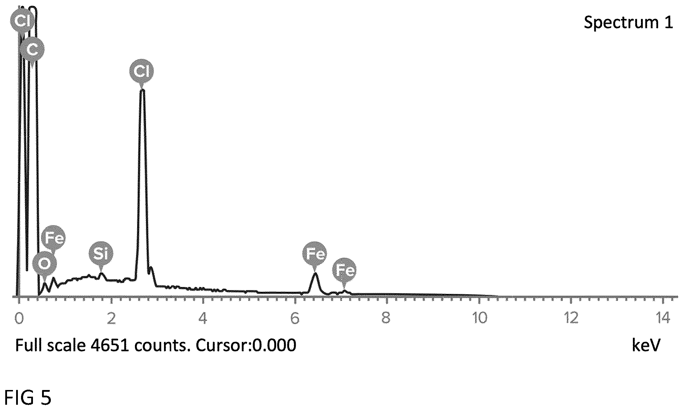

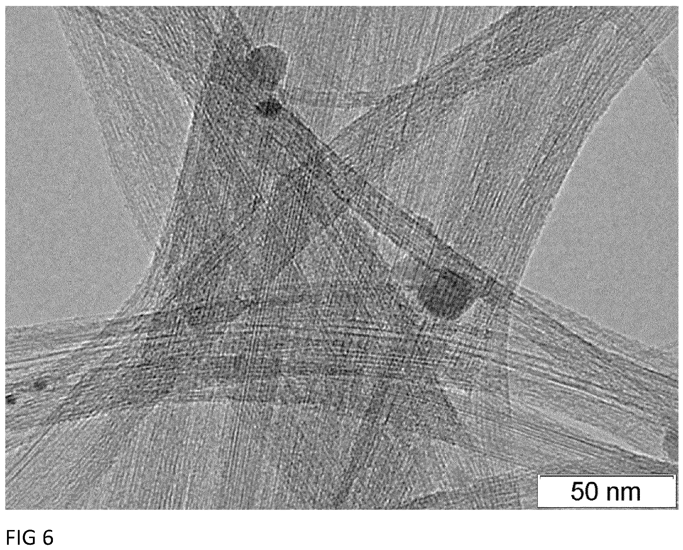

The modified carbon material is produced using the carbon material comprising mostly single walled carbon nanotubes (the ratio of integral intensities of the G mode and D mode in the Raman spectrum for light wavelength 532 nm is 112), as well as impurities of iron compounds, mostly oxides. The likely source of impurities is the catalyst used to produce the carbon material. The carbon material has a specific surface area of 540 m²/g, according to the results of elemental analysis by energy dispersive spectroscopy, the content of carbon in the carbon material is 75.9 wt.%, oxygen 9.0 wt.%, sulfur 0.30 wt.%, iron 14.7 wt.%. Chlorine in the initial carbon material is absent or is present in an amount below the detection threshold of the analysis (0.05 wt.%), the EDS spectrum is shown in Fig. 4. 1 kg of this material is contacted with 35 L of 3.5 wt. % (1 M) hydrochloric acid to produce a suspension of the carbon material comprising mostly single walled carbon nanotubes in the iron chloride solution. Then, 6 kg of wet carbon material with a moisture content of 85 wt.% is separated by filtration from the iron chloride solution and contacted with 25 L of the hydrogen peroxide solution with a concentration of 5 wt.%, and 4.2 kg of wet carbon material with a moisture content of 78 wt.% is separated from the solution using a filtering centrifuge. Then, the wet carbon material is placed into a drying oven and subjected to thermal treatment at a temperature of 130°C for 24 hrs. The moisture content of the material after thermal treatment is 1.8 wt.%. According to the results of elemental analysis by energy dispersive spectroscopy, the produced material comprises 92.7 wt.% carbon; 2.1 wt.% oxygen; 1.5 wt.% iron; and 3.7 wt.% of chlorine. The EDS spectrum of the modified carbon material is shown in Fig. 5. According to the TEM data (microphotograph shown in Fig. 6), the sample still contains mostly single walled carbon nanotubes. According to Raman spectroscopy results for light wavelength 532 nm, the ratio of integral intensities of the G mode and D mode is 92.

### Example 6.

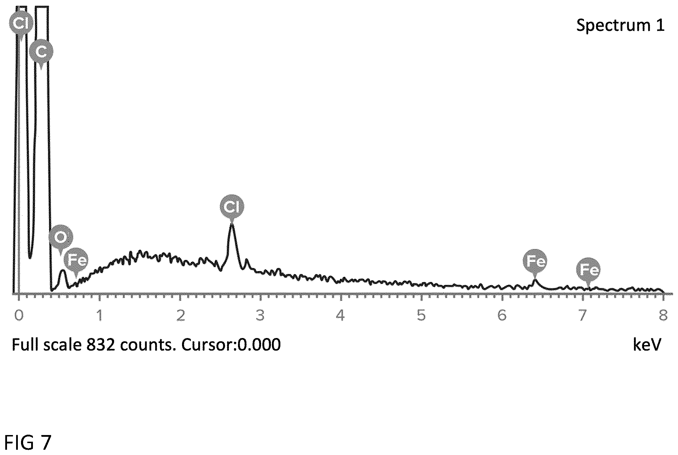

The modified carbon material is produced using the same carbon material as provided in Example 5, but 1 kg of the initial carbon material comprising impurities of iron oxide is reacted with 30 L of 7 wt.% (2 M) hydrochloric acid to produce the suspension of the carbon material comprising mostly single walled carbon nanotubes in the iron chloride solution. Then, 6.2 kg of wet carbon material with a moisture content of 86 wt.% is separated from the iron chloride solution by filtration and suspended in 300 L water, thoroughly stirred, and 1.75 kg of wet carbon material with a moisture content of 53 wt.% is separated using a filtering centrifuge. The wet carbon material is placed into a vacuum drying oven with stirring and subjected to thermal treatment under 200 mbar vacuum and oven walled temperature 160°C for 24 hrs. The moisture content of the material after thermal treatment is 1.9 wt.%. According to the results of elemental analysis by energy dispersive spectroscopy, the produced material comprises 97.1 wt.% carbon; 2.2 wt.% oxygen; 0.23 wt.% iron; and 0.47 wt.% of chlorine. The EDS spectrum of the modified carbon material is shown in Fig. 7. According to Raman spectroscopy results for light wavelength 532 nm, the ratio of integral intensities of the G mode and D mode is 97.

### Example 7 (Comparative)

To produce the polymer composite material, 98 g of low-density polyethylene is mixed with 2 g of 10 wt.% carbon material concentrate comprising single walled nanotubes in polyethylene wax PW-200 using extrusion in a twin-screw extruder with a cylinder temperature 200-230 °C, screw rotation rate 500 rpm. The black strand exiting the extruder is cooled down with water and cut into 2 mm pellets using a rotary knife. The produced pellets are compressed at a temperature of 170 °C and pressure of 100 bar for 15 min. The material is produced using 10 wt.% concentrate in polyethylene wax PV-200 of the carbon material comprising single walled nanotubes and not modified with chlorine, which was described in Example 3 as the initial material. Introduction of the carbon material into polyethylene wax and its dispersion in it are performed in a three-roll mill. The produced polymer composite material comprises 0.2 wt.% of the carbon material comprising single walled nanotubes and not modified with chlorine described in Example 3 as the initial material, and has a volume resistivity 5·10⁴ Ohm·cm.

### Example 8.

The polymer composite material is prepared similarly to Example 7, but 2 g of 10 wt.% concentrate in polyethylene wax PW-200 of the carbon material comprising single walled nanotubes modified with chlorine and comprising 5.5 wt.% of chlorine described in Example 4 are used. Introduction and dispersion of the carbon material in polyethylene wax are performed in a three-roll mill. The polymer composite material produced by this method comprises 0.2 wt.% of the carbon material comprising single walled nanotubes modified with chlorine and comprising 5.5 wt.% of chlorine described in Example 4, and has a volume resistivity 6·10³ Ohm·cm, which is 8 times lower than when using the same amount of carbon material not modified with chlorine as the conductive additive (Example 7).

### Example 9 (Comparative)

To produce the polymer composite material, 99 g of acrylonitrile-butadiene-styrene copolymer (ABS) is mixed with 1 g of 10 wt.% carbon material concentrate comprising single walled nanotubes in pentaerythritol tetrastearate by extrusion in a twin-screw extruder with a cylinder temperature 250°C, screw rotation rate 500 rpm. The black strand exiting the extruder is cooled down with water and cut into 2 mm pellets using a rotary knife. The produced pellets are compressed at a temperature of 230°C and pressure of 100 bar for 15 min. The material is produced using 10 wt.% concentrate in pentaerythrityl tetrastearate of the carbon material comprising single walled nanotubes and not modified with chlorine described in Example 3 as the initial material. Introduction and dispersion of the carbon material in pentaerythrityl ester are performed in a three-roll mill. As a result, the produced polymer composite material comprises 0.1 wt.% of the carbon material comprising single walled nanotubes and not modified with chlorine described in Example 3, and has a volume resistivity 6·10⁶ Ohm·cm.

### Example 10.

The polymer composite material is prepared similarly to Example 9, but 1 g of 10 wt.% of the concentrate in pentaerythrityl tetrastearate of the carbon material comprising single walled nanotubes modified with chlorine and comprising 5.5 wt.% of chlorine described in Example 4 is used for preparation. Introduction and dispersion of the carbon material in pentaerythrityl tetrastearate are performed in a three-roll mill. As a result, the produced polymer composite material comprises 0.1 wt.% of the carbon material comprising single walled nanotubes modified with chlorine and comprising 5.5 wt.% of chlorine described in Example 4, and has a volume resistivity 8·10⁵ Ohm·cm, which is 7 times lower than when using the same amount of carbon material not modified with chlorine as the conductive additive (Example 9).

### Example 11 (Comparative)

The polymer composite material is prepared by sequentially mixing oligomers, surfactants, photoinitiator, solvent, and concentrate of the carbon material comprising single walled nanotubes, drying, and curing the mixture under UV light. The reaction mixture is prepared using 14.8 g of 3-functional acrylate trimethylolpropane triacrylate, 37.4 g of 6-bifunctional amine acrylate Genomer 5695, 1.8 g of dispersant BYK 9076, 0.6 g of antifoaming agent Surfynol MD-20, 40 g butyl acetate, 4 g of photoinitiator ethyl(2,4,6-trimethylbenzoyl)phenylphosphinate, and 0.4 g of 5 wt.% of the concentrate in polyoxyethylene (20) sorbitan monooleate of the carbon material comprising single walled nanotubes and not modified with chlorine described in Example 5 as the initial material. Introduction and dispersion of the carbon material in polyoxyethylene (20) sorbitan monooleate are performed in a three-roll mill. The components of the reaction mixture are mixed with an overhead stirrer. As a result, the produced polymer composite material comprises 0.03 wt.% of the carbon material comprising single walled nanotubes and not modified with chlorine described in Example 5, and has a volume resistivity 24 Ohm·m.

### Example 12.

The polymer composite material is prepared by sequentially mixing oligomers, surfactants, photoinitiator, solvent, and concentrate of the carbon material comprising single walled nanotubes, drying, and curing the mixture under UV light. The reaction mixture is prepared using 14.8 g of 3-functional acrylate trimethylolpropane triacrylate, 37.4 g of 6-bifunctional amine acrylate Genomer 5695, 1.8 g of dispersant BYK 9076, 0.6 g of antifoaming agent Surfynol MD-20, 40 g of butyl acetate, 4 g of photoinitiator ethyl(2,4,6-trimethylbenzoyl)phenylphosphinate, and 0.4 g of 5 wt.% of the concentrate in polyoxyethylene (20) sorbitan monooleate of the carbon material comprising single walled nanotubes modified with chlorine and comprising 3.7 wt.% of chlorine described in Example 5. Introduction and dispersion of the carbon material in polyoxyethylene (20) sorbitan monooleate are performed in a three-roll mill. The components of the reaction mixture are mixed with an overhead stirrer. As a result, the produced polymer composite material comprises 0.03 wt.% of the carbon material comprising single walled nanotubes modified with chlorine and comprising 3.7 wt.% of chlorine described in Example 5, and has a volume resistivity 12 Ohm·m.

### Example 13.

The polymer composite material is prepared by sequentially mixing oligomers, surfactants, photoinitiator, solvent, and concentrate of the carbon material comprising single walled nanotubes, drying, and curing the mixture under UV light. The reaction mixture is prepared using 14.8 g of 3-functional acrylate trimethylolpropane triacrylate, 37.4 g of 6-bifunctional amine acrylate Genomer 5695, 1.8 g of dispersant BYK 9076, 0.6 g of antifoaming agent Surfynol MD-20, 40 g of butyl acetate, 4 g of photoinitiator ethyl(2,4,6-trimethylbenzoyl)phenylphosphinate, and 0.4 g of 5 wt.% of the concentrate in polyoxyethylene (20) sorbitan monooleate of the carbon material comprising single walled nanotubes modified with chlorine and comprising 5.5 wt.% of chlorine described in Example 4. Introduction and dispersion of the carbon material in polyoxyethylene (20) sorbitan monooleate are performed in a three-roll mill. The components of the reaction mixture are mixed with an overhead stirrer. As a result, the produced polymer composite material comprises 0.03 wt.% of the carbon material comprising single walled nanotubes modified with chlorine and comprising 5.5 wt.% of chlorine described in Example 4, and has a volume resistivity 3.2 Ohm·m, which is 7.5 times lower than when using the same amount of carbon material not modified with chlorine as the conductive additive (Example 11).

### Example 14 (Comparative)

The polymer composite material is prepared by sequentially mixing two components of silicon rubber mixture and the carbon material concentrate comprising single walled nanotubes, vulcanization of the produced mixture at 160°C, pressure 200 kgf/cm² for 6 minutes and further post-vulcanization at 200°C and atmospheric pressure for four hours. The mixture is prepared using 49 g of component A Elastosil^{®} LR 3003/30 (Wacker Chemie AG), 49 g of component B Elastosil^{®} LR 3003/30 (Wacker Chemie AG) and 2 g of the 10 wt.% concentrate in polydimethylsiloxane of the carbon material comprising single walled nanotubes and not modified with chlorine described in Example 5 as the initial material. Introduction and dispersion of the carbon material in polydimethylsiloxane are performed in a three-roll mill. The components of the reaction mixture are mixed in a three-roll mill. As a result, the produced polymer composite material comprises 0.2 wt.% of the carbon material comprising single walled nanotubes and not modified with chlorine described in Example 5, and has a volume resistivity 5·10⁴ Ohm·cm.

### Example 15

The polymer composite material is prepared similarly to Example 14, but 2 g of 10 wt.% concentrate in polydimethylsiloxane of the carbon material comprising single walled nanotubes modified with chlorine and comprising 3.7 wt.% of chlorine described in Example 5 is introduced into the mixture. As a result, the produced polymer composite material comprises 0.2 wt.% of the carbon material comprising single walled nanotubes modified with chlorine, and has a volume resistivity 3·10¹² Ohm·cm, which is 2 times lower than when using the same amount of the carbon material not modified with chlorine as the conductive additive (Example 14).

### Example 16 (Comparative)

The polymer composite material is prepared by sequentially mixing two components of rubber mixture and the concentrate of the carbon material comprising single walled nanotubes, and vulcanization of the produced mixture at a temperature of 160°C and pressure of 200 kgf/cm² for 30 minutes. Mixture formulation is provided in Table 1.

**Table 1**

| Name | phr |
|---|---|
| Ethylene-propylene rubber (EPDM) | 100.00 |
| Stearic acid | 1.00 |
| Carbon black for rubber N330 according to TU 38-41558-97 | 80.00 |
| Concentrate of the carbon material comprising single walled nanotubes | 2.4 |
| Naphthenic oil ASTM type 103 | 50.00 |
| Zinc oxide | 5.00 |
| Sulfur | 1.50 |
| Tetramethylthiuram disulphide (TMTD) | 1.00 |
| Mercaptobenzothiazole (MBT) | 0.50 |
| Total | 241.40 |

The concentrate of the carbon material comprising single walled nanotubes introduced into the mixture is 10 wt.% concentrate in polydimethylsiloxane of the carbon material comprising single walled nanotubes and not modified with chlorine described in Example 5 as the initial material. Introduction and dispersion of the carbon material in polydimethylsiloxane are performed in a three-roll mill. The components of the reaction mixture are mixed in an internal rubber mixer. As a result, the produced polymer composite material comprises 0.1 wt.% of the carbon material comprising single walled nanotubes and not modified with chlorine described in Example 5, and has a volume resistivity 3·10⁹ Ohm·cm.

### Example 17.

The polymer composite material is prepared similarly to Example 16, but 2.4 g of 10 wt.% concentrate in polydimethylsiloxane of the carbon material comprising single walled nanotubes modified with chlorine and comprising 3.7 wt.% of chlorine described in Example 5 are introduced into the mixture. Introduction and dispersion of the carbon material in polydimethylsiloxane are performed in a three-roll mill. The components of the reaction mixture are mixed in an internal rubber mixer. As a result, the produced polymer composite material comprises 0.1 wt.% of the carbon material comprising single walled nanotubes and not modified with chlorine described in Example 6, and has a volume resistivity 3·10⁸ Ohm·cm, which is 10 times lower than when using the same amount of carbon material not modified with chlorine as the conductive additive (Example 16).

### Example 18. (Comparative)

The polymer composite material is prepared by curing a pre-dried reaction mixture of polymer, surfactants, titania, solvent, and concentrate of the carbon material comprising single walled nanotubes.

The reaction mixture is prepared using 20 g of acrylic resin Degalan 64/12, 15 g of titania, 1 g of dispersant BYK 9076, 54 g of butyl acetate, 2.7 g of 1 wt.% of concentrate in dispersant BYK 9076 of the carbon material comprising single walled nanotubes and not modified with chlorine described in Example 5 as the initial material. The dispersion of the carbon material in dispersant BYK 9076 is performed in a three-roll mill. The components of the reaction mixture are mixed with an overhead stirrer. The polymer composite material produced by this method comprises 0.03 wt.% of the carbon material comprising single walled nanotubes and not modified with chlorine described in Example 5 as the initial material, and has a volume resistivity 10⁶ Ohm·cm.

### Example 19.

The polymer composite material is prepared similarly to Example 18, but 2.7 g of 1 wt.% concentrate in dispersant BYK 9076 of the carbon material comprising single walled nanotubes modified with chlorine and comprising 3.7 wt.% of chlorine described in Example 5 are introduced into the mixture. The polymer composite material produced by this method comprises 0.03 wt.% of the carbon material comprising single walled nanotubes modified with chlorine and comprising 3.7 wt.% of chlorine described in Example 5, and has a volume resistivity 3·10⁵ Ohm·cm, which is 3.3 times lower than when using the same amount of carbon material not modified with chlorine as the conductive additive (Example 18).

### Example 20.

The polymer composite material is prepared similarly to Example 18, but 2.7 g of 1 wt.% concentrate in dispersant BYK 9076 of the carbon material comprising single walled nanotubes modified with chlorine and comprising 5.5 wt.% of chlorine described in Example 4 are introduced into the mixture. The polymer composite material produced by this method comprises 0.03 wt.% of the carbon material comprising single walled nanotubes modified with chlorine and comprising 5.5 wt.% of chlorine described in Example 4, and has a volume resistivity 1.2·10⁵ Ohm·cm, which is 8.1 times lower than when using the same amount of carbon material not modified with chlorine as the conductive additive (Example 18).

### Example 21 (Comparative)

The polymer composite material is prepared by sequentially mixing prepolymer SKU-PFL-74, the concentrate of the carbon material comprising single walled nanotubes, and curing agent MOCA, curing the mixture at a temperature of 110°C, and subsequent condensation at room temperature. The reaction mixture is prepared using 266.3 g of prepolymer SKU-PFL-74, 33.6 g of curing agent MOCA, and 0.15 g of 10 wt.% of the concentrate in a mixture of dispersant BYK 9076 and resin Cardura E10P of the carbon material comprising single walled nanotubes and not modified with chlorine described in Example 5 as the initial material. Introduction and dispersion of the carbon material in the mixture of dispersant BYK 9076 and resin Cardura E10P are performed in a three-roll mill. The components of the reaction mixture are mixed in a dissolver. As a result, the produced polymer composite material comprises 0.05 wt.% of the carbon material comprising single walled nanotubes and not modified with chlorine described in Example 5, and has a volume resistivity 7.7·10⁵ Ohm·cm.

### Example 22.

The polymer composite material is prepared similarly to Example 21, but 0.15 g of 10 wt.% of the concentrate in a mixture of dispersant BYK 9076 and resin Cardura E10P of the carbon material comprising single walled nanotubes modified with chlorine and comprising 3.7 wt.% of chlorine described in Example 5 are introduced into the mixture. Introduction and dispersion of the carbon material in dispersant BYK 9076 are performed in a three-roll mill. The components of the reaction mixture are mixed with an overhead stirrer. As a result, the produced polymer composite material comprises 0.03 wt.% of the carbon material comprising single walled nanotubes modified with chlorine and comprising 3.7 wt.% of chlorine described in Example 5, and has a volume resistivity 3.1·10⁵ Ohm·cm, which is 2.5 times lower than when using the same amount of carbon material not modified with chlorine as the conductive additive (Example 21).

### Example 23.

The polymer composite material is prepared similarly to Example 21, but 0.15 g of 10 wt.% of the concentrate in a mixture of dispersant BYK 9076 and resin Cardura E10P of the carbon material comprising single walled nanotubes modified with chlorine and comprising 5.5 wt.% of chlorine described in Example 4 are introduced into the mixture. Introduction and dispersion of the carbon material in dispersant BYK 9076 are performed in a three-roll mill. The components of the reaction mixture are mixed with an overhead stirrer. As a result, the produced polymer composite material comprises 0.03 wt.% of the carbon material comprising single walled nanotubes modified with chlorine and comprising 5.5 wt.% of chlorine described in Example 4, and has a volume resistivity 1·10⁵ Ohm·cm, which is 7.7 times lower than when using the same amount of carbon material not modified with chlorine as the conductive additive (Example 21).

### Industrial Applicability

Carbon materials with chlorinated surface have an enhanced stability towards oxidation, including in wet environments. They can be used as additives to various materials to produce novel composite materials, such as polymer conductive materials.

On the other hand, conductive polymer materials are used everywhere: conductivity to ensure dissipation of static electricity charge at the level of higher than 10⁻⁸-10⁻⁶ S/cm (the requirements may vary depending on the conditions of the material application) is a mandatory requirement to all materials and coatings used in production rooms, where electrostatic discharge may pose a threat to the people and equipment: technical rooms and laboratories as well as explosion-proof zones where powder materials, gases, and solvents are manufactured and processed. These include bakeries, milling shops, metalworking plants, etc. For rubbing moving and stationary elements: conveyor belts, rollers, wheel tires, coatings of troughs and pipelines transporting loose products, etc., the requirements to electrical conductivity are often more stringent: the volume resistivity of materials they are made from should be lower than 10⁵-10⁶ Ohm·cm. Certain applications require coatings with high conductivity: e.g. conductive primers for painting articles made of nonconductive polymer materials. Finally, certain polymer composites are used as current-carrying elements: cable coupling sleeves, etc.

Chlorine modification of the surface of single walled carbon nanotubes results in the changes in the population of the valence band of semiconductive single walled carbon nanotubes and their increased electrical conductivity. In this respect, upon introduction of chlorine-modified single walled carbon nanotubes into a polymer composite material, the desired electrical conductivity can be achieved at lower concentrations of nanotubes, and therefore with minimum impact on other properties of the polymer material.

The provided method to produce a chlorine-modified carbon material and a composite conductive material comprising the chlorine-modified carbon material differs from prior art methods in its relative simplicity in industrial implementation, as it does not involve utilization of highly toxic and chemically aggressive environments at high temperatures. The method can be implemented using currently known designs of chemical equipment.

## Claims

1. A method of producing a carbon material comprising single walled carbon nanotubes and modified with chlorine, **characterized in that** the method comprises the following steps performed sequentially:
(a) reacting carbon material (I) comprising single walled carbon nanotubes with an iron chloride solution having a concentration of at least 0.1 M,
(b) separating wet carbon material from an iron chloride solution,
(c) thermally treating wet carbon material, simultaneously evaporating the solution and drying the carbon material to the desired moisture content.

2. The method of claim 1, **characterized in that** the step (b) of separating from the iron chloride solution is followed by reacting the wet carbon material with a hydrogen peroxide solution with a concentration of at least 0.1 wt.%, and then reseparating the wet carbon material from the solution with a moisture content of not more than 90 wt.%, followed by the step (c).

3. The method of claim 1, **characterized in that** before the step (c) of thermal treatment, the carbon material is washed with water, and then the wet carbon material is again separated from the solution with a moisture content of not more than 90 wt.%.

4. A method of producing a chlorine-modified carbon material comprising single walled carbon nanotubes, **characterized in that** the carbon material (I) comprising single walled carbon nanotubes and 0.5 to 50 wt.% of iron oxide impurities is reacted with a hydrochloric acid solution with a concentration of at least 0.1 M at a temperature of not lower than 40°C, the wet carbon material is separated from iron chloride, the wet material is subjected to thermal treatment, simultaneously evaporating the solution and drying the carbon material to the desired moisture content.

5. The method of claim 4, **characterized in that** the carbon material (I) is produced by oxidizing the carbon material (II) comprising single walled carbon nanotubes and 0.3 to 40 wt.% of impurities of nanosized phases of iron carbide and metallic iron in the flow of a gas comprising molecular oxygen and water vapors at a temperature of at least 300°C.

6. The method of claim 5, **characterized in that** the carbon material (II) comprising nanosized iron carbide and metallic iron is prepared by chemical vapor deposition from a hydrocarbon or a mixture of hydrocarbons with the use of nanoparticles of an iron-containing catalyst.

7. The method of claim 1 or 4, **characterized in that** the content of carbon in the carbon material (I) is at least 50 wt.%.

8. The method of claim 1 or 4, **characterized in that** the ratio of integral intensities of the G mode and D mode in the Raman spectrum for light wavelength 532 nm for the carbon material (I) is at least 2.

9. The method of claim 1 or 4, **characterized in that** the ratio of integral intensities of the G mode and D mode in the Raman spectrum for light wavelength 532 nm for the carbon material (I) is at least 50.

10. The method of claim 1 or 4, **characterized in that** the moisture content of the wet carbon material separated from the solution is not more than 90 wt.%.

11. A carbon material comprising single walled carbon nanotubes and modified with chlorine, **characterized in that** the material is obtainable by a method of claim 1 or 4, and the ratio of integral intensities of the G mode and D mode in the Raman spectrum for light wavelength 532 nm for this carbon material is at least 50.

12. A method of producing a conductive polymer material, **characterized in that** the method includes the step of introducing the carbon material comprising single walled carbon nanotubes and modified with chlorine of claim 11 into a polymer material, a reaction mixture used in the reaction of polymerization or polycondensation, to form the polymer material, or one of the components of this reaction mixture.

13. The method of claim 12, **characterized in that** the carbon material comprising single walled carbon nanotubes and modified with chlorine is introduced into the reaction mixture as a part of a composition with a surfactant.

14. The method of claim 12, **characterized in that** the reaction of polymerization is performed under ultraviolet radiation.

15. The method of claim 12, **characterized in that** the reaction of polymerization is performed at a temperature of at least 60°C.

## Patentansprüche

1. Verfahren zur Herstellung eines Kohlenstoffmaterials, das einwandige Kohlenstoff-Nanoröhrchen umfasst und mit Chlor modifiziert ist, **dadurch gekennzeichnet, dass** das Verfahren die folgenden Schritte umfasst, die der Reihe nach durchgeführt werden:
(a) Umsetzen von Kohlenstoffmaterial (I), das einwandige Kohlenstoff-Nanoröhrchen umfasst, mit einer Eisenchloridlösung mit einer Konzentration von mindestens 0,1 M,
(b) Abtrennen von feuchtem Kohlenstoffmaterial aus einer Eisenchloridlösung,
(c) thermisches Behandeln von feuchtem Kohlenstoffmaterial, wobei gleichzeitig die Lösung verdampft wird und das Kohlenstoffmaterial auf den gewünschten Feuchtigkeitsgehalt getrocknet wird.

2. Verfahren gemäß Anspruch 1, **dadurch gekennzeichnet, dass** auf den Schritt (b) des Abtrennens von der Eisenchloridlösung das Umsetzen des feuchten Kohlenstoffmaterials mit einer Wasserstoffperoxid-Lösung mit einer Konzentration von mindestens 0,1 Gew.-% und dann erneutes Abtrennen des feuchten Kohlenstoffmaterials aus der Lösung mit einem Feuchtigkeitsgehalt von nicht mehr als 90 Gew.-% folgt, gefolgt von Schritt (c).

3. Verfahren gemäß Anspruch 1, **dadurch gekennzeichnet, dass** vor dem Schritt (c) der thermischen Behandlung das Kohlenstoffmaterial mit Wasser gewaschen wird und dann das feuchte Kohlenstoffmaterial erneut von der Lösung mit einem Feuchtigkeitsgehalt von nicht mehr als 90 Gew.-% abgetrennt wird.

4. Verfahren zur Herstellung eines chlormodifizierten Kohlenstoffmaterials, das einwandige Kohlenstoff-Nanoröhrchen umfasst, **dadurch gekennzeichnet, dass** das Kohlenstoffmaterial (I), das einwandige Kohlenstoff-Nanoröhrchen und 0,5 bis 50 Gew.-% Eisenoxid-Verunreinigungen umfasst, mit einer Salzsäurelösung mit einer Konzentration von mindestens 0,1 M bei einer Temperatur von nicht niedriger als 40°C umgesetzt wird, das feuchte Kohlenstoffmaterial von Eisenchlorid abgetrennt wird, das feuchte Material der thermischen Behandlung unterzogen wird, wobei gleichzeitig die Lösung verdampft wird und das Kohlenstoffmaterial auf den gewünschten Feuchtigkeitsgehalt getrocknet wird.

5. Verfahren gemäß Anspruch 4, **dadurch gekennzeichnet, dass** das Kohlenstoffmaterial (I) hergestellt wird, indem das Kohlenstoffmaterial (II), das einwandige Kohlenstoff-Nanoröhrchen und 0,3 bis 40 Gew.-% Verunreinigungen aus Phasen in Nanogröße von Eisencarbind und metallischem Eisen umfasst, in dem Fluss eines Gases, das molekularen Sauerstoff und Wasserdampf umfasst, bei einer Temperatur von mindestens 300°C oxidiert wird.

6. Verfahren gemäß Anspruch 5, **dadurch gekennzeichnet, dass** das Kohlenstoffmaterial (II), das Eisencarbid und metallisches Eisen in Nanogröße umfasst, hergestellt wird durch chemische Abscheidung aus der Gasphase aus einem Kohlenwasserstoff oder einer Mischung von Kohlenwasserstoffen unter Verwendung von Nanopartikeln eines eisenhaltigen Katalysators.

7. Verfahren gemäß Anspruch 1 oder 4, **dadurch gekennzeichnet, dass** der Gehalt von Kohlenstoff in dem Kohlenstoffmaterial (I) mindestens 50 Gew.-% ist.

8. Verfahren gemäß Anspruch 1 oder 4, **dadurch gekennzeichnet, dass** das Verhältnis von integralen Intensitäten der G-Mode und D-Mode in dem Raman-Spektrum für Licht mit der Wellenlänge von 532 nm für das Kohlenstoffmaterial (I) mindestens 2 ist.

9. Verfahren gemäß Anspruch 1 oder 4, **dadurch gekennzeichnet, dass** das Verhältnis von integralen Intensitäten der G-Mode und D-Mode in dem Raman-Spektrum für Licht mit der Wellenlänge von 532 nm für das Kohlenstoffmaterial (I) mindestens 50 ist.

10. Verfahren gemäß Anspruch 1 oder 4, **dadurch gekennzeichnet, dass** der Feuchtigkeitsgehalt des feuchten Kohlenstoffmaterials, das von der Lösung abgetrennt wird, nicht mehr als 90 Gew.-% ist.

11. Kohlenstoffmaterial, das einwandige Kohlenstoff-Nanoröhrchen umfasst und mit Chlor modifiziert ist, **dadurch gekennzeichnet, dass** das Material mit einem Verfahren nach Anspruch 1 oder 4 erhältlich ist und das Verhältnis von integralen Intensitäten der G-Mode und D-Mode in dem Raman-Spektrum für Licht mit der Wellenlänge von 532 nm für dieses Kohlenstoffmaterial mindestens 50 ist.

12. Verfahren zur Herstellung eines leitfähigen Polymermaterials, **dadurch gekennzeichnet, dass** das Verfahren den Schritt einschließt, dass das Kohlenstoffmaterial von Anspruch 11, das einwandige Kohlenstoff-Nanoröhrchen umfasst und mit Chlor modifiziert ist, in ein Polymermaterial, eine Reaktionsmischung, die bei der Reaktion der Polymerisation oder Polykondensation verwendet wird, um das Polymermaterial zu bilden, oder eine der Komponenten dieser Reaktionsmischung eingeführt wird.

13. Verfahren gemäß Anspruch 12, **dadurch gekennzeichnet, dass** das Kohlenstoffmaterial, das einwandige Kohlenstoff-Nanoröhrchen umfasst und mit Chlor modifiziert ist, in die Reaktionsmischung als Teil einer Zusammensetzung mit einem Tensid eingeführt wird.

14. Verfahren gemäß Anspruch 12, **dadurch gekennzeichnet, dass** die Reaktion der Polymerisation unter UltraviolettBestrahlung durchgeführt wird.

15. Verfahren gemäß Anspruch 12, **dadurch gekennzeichnet, dass** die Reaktion der Polymerisation bei einer Temperatur von mindestens 60°C durchgeführt wird.

## Revendications

1. Procédé de production d'un matériau à base de carbone comprenant des nanotubes de carbone à paroi simple et modifié par du chlore, **caractérisé en ce que** le procédé comprend les étapes suivantes effectuées de manière séquentielle :
(a) faire réagir un matériau à base de carbone (I) comprenant des nanotubes de carbone à paroi simple avec une solution de chlorure de fer présentant une concentration d'au moins 0,1 M,
(b) séparer le matériau à base de carbone humide d'une solution de chlorure de fer,
(c) traiter thermiquement le matériau à base de carbone humide, évaporer simultanément la solution et sécher le matériau à base de carbone jusqu'à la teneur en humidité souhaitée.

2. Procédé selon la revendication 1, **caractérisé en ce que** l'étape (b) de séparation de la solution de chlorure de fer est suivie d'une réaction du matériau à base de carbone humide avec une solution de peroxyde d'hydrogène présentant une concentration d'au moins 0,1 % en poids, et ensuite la séparation renouvelée du matériau à base de carbone humide de la solution avec une teneur en humidité non supérieure à 90 % en poids, suivie de l'étape (c).

3. Procédé selon la revendication 1, **caractérisé en ce que**, avant l'étape (c) de traitement thermique, le matériau à base de carbone est lavé avec de l'eau, puis le matériau à base de carbone humide est de nouveau séparé de la solution avec une teneur en humidité non supérieure à 90 % en poids.

4. Procédé de production d'un matériau à base de carbone modifié par du chlore comprenant des nanotubes de carbone à paroi simple, **caractérisé en ce que** le matériau à base de carbone (I) comprenant des nanotubes de carbone à paroi simple et 0,5 à 50 % en poids d'impuretés d'oxyde de fer est mis à réagir avec une solution d'acide chlorhydrique présentant une concentration d'au moins 0,1 M à une température non inférieure à 40 °C, le matériau à base de carbone humide est séparé du chlorure de fer, le matériau humide est soumis à un traitement thermique, évaporant simultanément la solution et séchant le matériau à base de carbone jusqu'à la teneur en humidité souhaitée.

5. Procédé selon la revendication 4, **caractérisé en ce que** le matériau à base de carbone (I) est produit en oxydant le matériau à base de carbone (II) comprenant des nanotubes de carbone à paroi simple et 0,3 à 40 % en poids d'impuretés de phases nanométriques de carbure de fer et de fer métallique dans le flux d'un gaz comprenant de l'oxygène moléculaire et des vapeurs d'eau à une température d'au moins 300 °C.

6. Procédé selon la revendication 5, **caractérisé en ce que** le matériau à base de carbone (II) comprenant du carbure de fer nanométrique et du fer métallique est préparé par dépôt chimique en phase vapeur à partir d'un hydrocarbure ou d'un mélange d'hydrocarbures avec l'utilisation de nanoparticules d'un catalyseur contenant du fer.

7. Procédé selon la revendication 1 ou la revendication 4 **caractérisé en ce que** la teneur en carbone dans le matériau à base de carbone (I) est d'au moins 50 % en poids.

8. Procédé selon la revendication 1 ou la revendication 4, **caractérisé en ce que** le rapport des intensités intégrales du mode G et du mode D dans le spectre Raman pour la longueur d'onde lumineuse de 532 nm pour le matériau à base de carbone (I) est d'au moins 2.

9. Procédé selon la revendication 1 ou la revendication 4, **caractérisé en ce que** le rapport des intensités intégrales du mode G et du mode D dans le spectre Raman pour la longueur d'onde lumineuse de 532 nm pour le matériau à base de carbone (I) est d'au moins 50.

10. Procédé selon la revendication 1 ou la revendication 4, **caractérisé en ce que** la teneur en humidité du matériau à base de carbone humide séparé de la solution n'est pas supérieure à 90 % en poids.

11. Matériau à base de carbone comprenant des nanotubes de carbone à paroi simple et modifié par du chlore, **caractérisé en ce que** le matériau peut être obtenu par un procédé selon la revendication 1 ou la revendication 4, et le rapport des intensités intégrales du mode G et du mode D dans le spectre Raman pour la longueur d'onde lumineuse de 532 nm pour ce matériau à base de carbone est d'au moins 50.

12. Procédé de production d'un matériau polymère conducteur, **caractérisé en ce que** le procédé inclut l'étape d'introduction du matériau à base de carbone comprenant des nanotubes de carbone à paroi simple et modifié par du chlore selon la revendication 11 dans un matériau polymère, un mélange réactionnel utilisé dans la réaction de polymérisation ou polycondensation, afin de former le matériau polymère, ou un des composants de ce mélange réactionnel.

13. Procédé selon la revendication 12, **caractérisé en ce que** le matériau à base de carbone comprenant des nanotubes de carbone à paroi simple et modifié par du chlore est introduit dans le mélange réactionnel en tant que partie d'une composition avec un tensioactif.

14. Procédé selon la revendication 12, **caractérisé en ce que** la réaction de polymérisation est effectuée sous rayonnement ultraviolet.

15. Procédé selon la revendication 12, **caractérisé en ce que** la réaction de polymérisation est effectuée à une température d'au moins 60 °C.
